Europäisches Patentamt

European Patent Office

Office européen des brevets

(19)

(11) Publication number : **0 492 983 A2**

# EUROPEAN PATENT APPLICATION

(12)

(21) Application number : 91311795.8

(22) Date of filing : 19.12.91

(51) Int. Cl.$^5$ : **F25D 9/00, A23L 3/375**

(30) Priority : 26.12.90 US 633901

(43) Date of publication of application :
01.07.92 Bulletin 92/27

(84) Designated Contracting States :
**AT BE DE ES FR GB IT NL SE**

(71) Applicant : **THE BOC GROUP, INC.**
**575 Mountain Avenue**
**Murray Hill New Jersey 07974 (US)**

(72) Inventor : **Kirschner, Mark J.**
**38 Mt.Kemble Avenue**
**Morristown, New Jersey 07960 (US)**
Inventor : **Kulik, William M.**
**59 Spruce Street**
**Cranford, New Jersey 07016 (US)**
Inventor : **Sethna, Rustam H.**
**101B Riverdale Court**
**Scotch Plains, New Jersey 07076 (US)**
Inventor : **Lee, Ron C.**
**9 Fawn Run**
**Bloomsbury, New Jersey 08804 (US)**

(74) Representative : **Wickham, Michael et al**
**c/o Patent and Trademark Department The**
**BOC Group plc Chertsey Road**
**Windlesham Surrey GU20 6HJ (GB)**

(54) **Refrigeration system and method.**

(57) A food refrigeration system 10 for refrigerating articles of, for example, food, includes at least two cooling stages formed by a water cooler 154 and a cryogenic freezer 16. The cryogenic freezer 16 receives the articles of food and transfers heat from the articles of food to a liquid cryogen (liquid nitrogen) so that the articles of food are refrigerated. The transfer of heat from the articles of food to the cryogen causes the cryogen to boil and thereby evolve a cryogenic vapour. The cooler 14 receives the articles of food prior to the cryogenic freezer 16 and transfers heat from the articles of food to the cooling water. Such heat transfer reduces the quantity of cryogen required to refrigerate the articles of food. An eductor 50 is connected to a pump 62 and to vent duct 72 from the cryogenic freezer 16. The cooling water is pumped through the eductor 50 to suck cryogenic vapour from the cryogenic freezer 16 and to mix the cryogenic vapour and the cooling water prior to reception of the cooling water in the cooler 14. Such mixing transfers heat from the cooling water to the cryogenic vapour resulting in an increase the heat transfer between the articles and the cooling water in the cooler 14. As a result of such increased heat transfer, the amount of cryogen required in refrigerating the articles is reduced.

FIG. 1

EP 0 492 983 A2

The present invention relates to a refrigeration apparatus and method having two or more cooling stages in which food is refrigerated by transferring heat from the food to cooling water and then to a liquid cryogen causing the cryogen to boil and thereby evolve a cryogenic vapour. The present invention also relates to a method and apparatus for cooling articles in which cooling potential of a cryogenic vapour is recovered in the cooling water by drawing the cryogenic vapour into a mixture with cooling water through use of an eductor.

The term liquid cryogen as used herein includes within its cope liquid nitrogen and liquid carbon dioxide.

Refrigeration systems are known in which heat is extracted from the articles of food in sequential cooling stages. In such refrigeration systems, a first of the cooling stages can comprise a hydrocooler, i.e. a cooler in which water is used as a cooling medium and a second of the cooling stages can comprise a cryogenic freezer, such as a liquid nitrogen immersion freezer used, if desired, in conjunction with a liquid nitrogen immersion freezer, or a carbon dioxide spiral belt freezer. A third cooling stage can be formed by a mechanical freezer. The hydrocooler, by provision of a water bath or water shower arrangement, pre-chills the food with cooling water, from a well or a tap or brine. In cryogenic cooler freezer, food is chilled by a bath or spray of cryogen to a temperature above freezing, crust frozen, or frozen throughout. When a cryogenic freezer is used in crust freezing food, a mechanical freezer is provided to complete the freezing of the food by transferring heat from the food to a recirculating refrigerant such as ammonia.

The number and types of cooling stages used in a particular food refrigeration system relate to the degree of refrigeration required and the particular food involved. For example, a food refrigeration system used in freezing fruit may consist of, in order, a hydrocooler, a liquid nitrogen immersion freezer and post cooling tunnel, and a mechanical freezer. In such a food refrigeration system, the hydrocooler is used to pre-chill the fruit, the liquid nitrogen immersion freezer and post cooling tunnel are used to crust freeze the fruit and the mechanical freezer is used to freeze the fruit throughout. The initial crust freezing of the fruit prevents the cellular damage to the fruit that would otherwise occur if the fruit were solely frozen throughout in a mechanical freezer. Another food refrigeration system may be formed by a hydrocooler and a liquid nitrogen immersion freezer without a post cooling tunnel; or a hydrocooler and a carbon dioxide spiral belt freezer. Such a refrigeration system could be used to freeze vegetables throughout without first crust freezing the vegetables. A liquid nitrogen immersion freezer may be used alone as a chiller to prevent articles of food, of a kind which in one stage of their processing are hot and sticky, from sticking to conveyor belts employed in moving the food through a food processing system. In accordance with the above discussion, it is to be noted that the term, "refrigeration" as used herein encompasses freezing, crust freezing and chilling.

In any of the food refrigeration systems, discussed above, the liquid cryogen in the cryogenic freezer is continually being expended in that the heat transfer to the liquid cryogen causes the cryogen to boil and thereby evolve cryogenic vapour which is vented from the refrigeration system. Thus, the cryogen must be continually replenished. The hydrocooler reduces the operating costs involved in continually replenishing the cryogen because the initial heat transfer to the cooling water in the hydrocooler decreases the cryogen requirements in the cryogenic freezer by pre-chilling the articles of food. The distribution of heat transfer between a hydrocooler and a cryogenic freezer decreases the amount of heat transfer between the cryogen and the food and thus, the rate of consumption of cryogenic liquid in the cryogenic freezer. It is appropriate to point out that the hydrocooler may also serve to rinse debris and surface contaminants from the articles to be eventually frozen.

In an additional conservation method, which can form yet another cooling stage of a food processing system, cryogenic vapour, such as is evolved in a liquid nitrogen immersion freezer, may be used to pre-cool the articles of food prior to their immersion in the liquid cryogen and thereby to conserve the amount of liquid cryogen needed for the particular refrigeration operation. A problem with using cryogenic vapour in this manner is that food articles tend to become dehydrated; and such dehydration results in a loss of food flavouring. Also, such pre-chillers using extract heat cryogenic gas relatively inefficiently.

As may be appreciated, refrigeration systems, such as those discussed above, are operated for long periods of time. One major operating expense is therefore the consumption of cryogen. An additional expense is the water usage. As will be discussed hereinafter, the present invention conserves both the cryogen and water to reduce such expenses.

The invention provides an apparatus as claimed in any one of claims 1 to 7, 11, 13 and 14, and a method as claimed in any one of claims 8 to 10, 12 and 15.

In one aspect, the present invention provides a food processing system and method for refrigerating food. The system comprises a supply of a cryogen, a source of cooling water, and at least two sequential cooling stages for transferring an amount of heat from the food sufficient to refrigerate the articles of food. The cooling water has a temperature lower than that of the food to define a temperature difference between the food and the cooling water. In a first of the at least two sequential cooling stages, means are provided, such as a hydrocooler, for transferring a portion of the amount of heat from the articles to the cooling water in proportion to the temperature difference between the food and the cooling water. A second of the at least two sequential cooling stages has means, such as a cryogenic freezer, for transferring a remaining portion of the amount of heat from the food to the cryogen so that a quantity of the cryogen boils off into a cryogenic vapour and is thereby expended.

The degree to which the cryogen is expended is decreased over prior art hydrocooler and cryogenic freezer arrangements by means, preferably a pump connected to the source of cooling water and an eductor connected to the pump and to the second of the at least two sequential cooling stages. Such means transfer further heat from the cooling water to the cryogenic vapour and thereby increase the temperature difference between the food and the cooling water. Delivery means are provided for thereafter delivering the cooling water to the first of the at least two sequential cooling stages. As a result, the portion of heat transferred from the food to cooling water is increased and the remaining portion of heat transferred from the articles to the cryogen is reduced along with the quantity of the cryogen expended. In a related aspect of the present invention, the delivery means can comprise a phase separation tank into which the cooling water is discharged from the eductor. Cooling water may be recycled from the first of the at least two cooling stages back to the phase separation tank instead of being discharged into a municipal sewer. As a result, the rate of water usage can also be reduced over prior art refrigeration systems.

In accordance with the method of the present invention, a cryogen is supplied along with cooling water at a temperature lower than that of the food to define a temperature difference between the food and the cooling water. An amount of heat is transferred from the articles in at least two sequential cooling stages so that the articles are refrigerated. In a first of the at least two sequential cooling stages, a portion of the amount of heat is transferred from the food to the cooling water in proportion to the temperature difference between the food and the cooling water, and in a second of the at least two sequential cooling stages, a remaining portion of the amount of heat is transferred from the food to the cryogen so that a quantity of the cryogen boils off into a cryogenic vapour and is thereby expended. Further heat is also transferred from the cooling water to the cryogenic vapour to increase the temperature difference between the food and the cooling water. Thereafter the cooling water is delivered to the the first of the at least two sequential cooling stages so that the portion of heat transferred from the articles to the cooling water is increased and the regaining portion of heat transferred from the food to the cryogen is reduced along with the quantity of the cryogen expended.

In a further aspect, the present invention provides an apparatus and method of cooling an article with a motive fluid having a temperature lower than that of the article. The apparatus comprises a source of the motive fluid, a source of cryogenic vapour, heat transfer means, a pump, eductor means and delivery means. The heat transfer means are provided for transferring heat from the article to the motive fluid. The pump has an inlet connected to the source of motive fluid and an outlet. The eductor means is connected to the outlet of the pump and the source of cryogenic vapour for drawing the cryogenic vapour into a mixture with the motive fluid, thereby effecting further heat transfer from the motive fluid to the cryogenic vapour and lowering the temperature of the motive fluid. The delivery means deliver the motive fluid from the eductor means to the heat transfer means. As a result, the heat transfer from the article to the motive fluid and thus, the cooling of the article are enhanced by the lower temperature the motive fluid.

In accordance with the further aspect, the present invention provides a method of cooling an article with a motive fluid having a temperature lower than that of the article. In accordance with the method, the motive fluid and a cryogenic vapour are supplied and heat is transferred from the article to the motive fluid thereby to cool the article. Prior to the heat transfer from the article to the motive fluid, the motive fluid is pumped through eductor means for drawing the cryogenic vapour into a mixture with the motive fluid and thereby transferring further heat from the motive fluid to the cryogenic vapour and lowering the temperature of the motive fluid. As a result, the heat transfer from the article to the motive fluid and the cooling of the article are enhanced by the lower temperature of the motive fluid.

The invention will now be described by way of example with reference to the accompanying drawings, in which:

Fig. 1 is a schematic illustration of an apparatus in accordance with the present invention;

Fig. 2 is a fragmentary cross-sectional view of Fig. 1; and

Fig. 3 is a cross-sectional view of an eductor in accordance with the present invention used in Fig. 1.

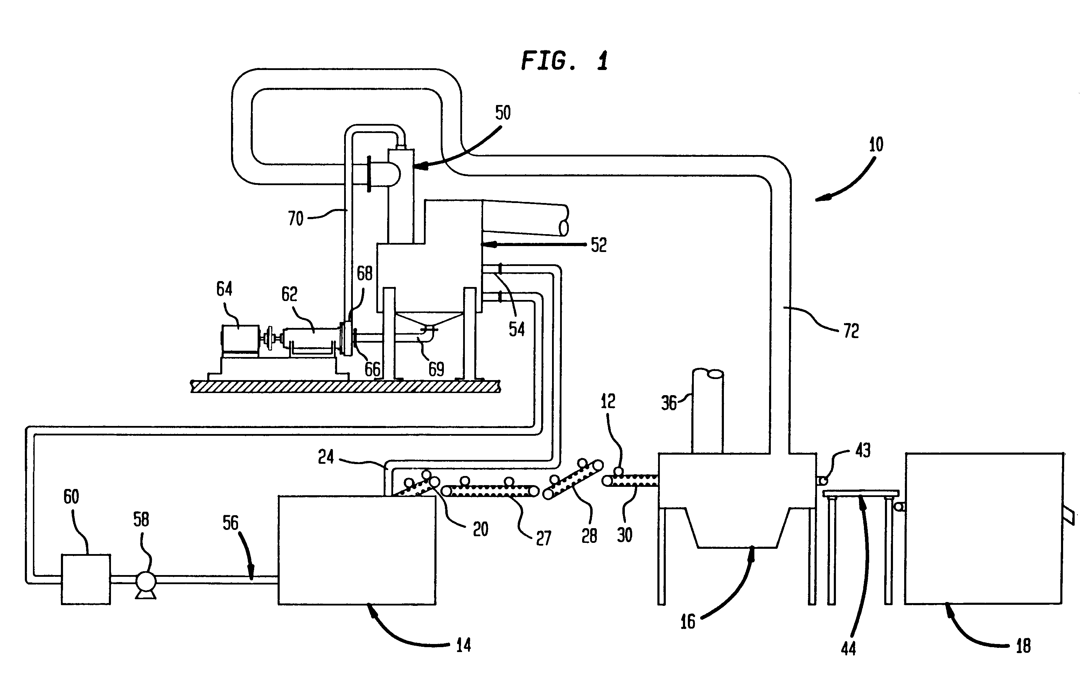

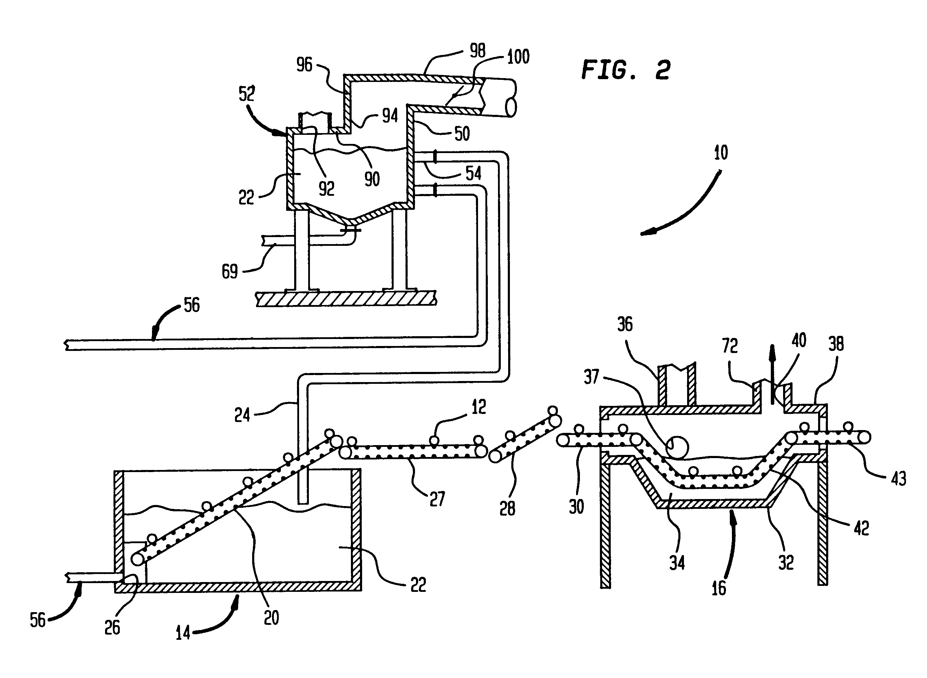

With reference to Figs. 1 and 2, a food refrigeration system 10 in accordance with the present invention is illustrated. The food refrigeration system 10 is used in the freezing of food 12 and is provided with three cooling stages formed by a hydrocooler 14, a liquid nitrogen immersion freezer 16, and a mechanical freezer 18. The food refrigeration system 10 is designed to be used in a seafood processing plant and food 10 comprises clams to be frozen for preservation purposes.

The food is first loaded onto a conveyor belt 20 located within hydrocooler 14. The hydrocooler 14 is of tank-like construction and contains cooling water 22 that is supplied by a delivery-pipe 24 and is drained from a drain 26. The cooling water 22 has a temperature lower than that of the food 12. There is thus a temperature difference by which heat is transferred from the food 12 to the cooling water 22.

After such heat transfer, food 12 is carried from the hydrocooler 14 by conveyor the 20 and deposited on a central, horizontal conveyor 27. The food 12 is next deposited on an inclined conveyor 28 which in turn deposits the food 12 on an inlet conveyor 30 of the liquid nitrogen immersion freezer 16. As illustrated, the liquid nitrogen immersion freezer 16 consists of a trough 32 for receiving liquid nitrogen 34. Liquid nitrogen 34 is supplied via an inlet pipe 36 having an opening 37. The trough 34 is covered by an insulated cover 38 having a vent 40. The conveyor 30 transfers the food 12 to a further conveyor 42 which immerses the food 2. The food 12 is immersed in liquid nitrogen 34 in trough 32 and then transfers the food 12 via an outlet conveyor 43 onto a shake table 44.

During immersion of the food 12, heat is transferred from it to the liquid nitrogen 34. Such heat transfer causes liquid nitrogen 34 to boil and thereby evolve a cryogenic vapour at a temperature of about 77K. It is to be noted that immersion freezer 16 can be a CIF-300 Series Liquid Nitrogen Immersion Freezer manufactured by Koach Engineering MFG, Inc. of 8950 Glenoaks Blvd., Sun Valley, California, 91352-2059.

The shake table 44 conducts food 12 to mechanical freezer 18 which can be a fluidised bed freezer, for example a Lewis IQF Freezer Series or a Flo-Freeze Series Freezer, manufactured by FrigoScandia Contracting, AB of Rushhallsgatan 21, S-251 09 Helsingborg, Sweden.

In the food refrigerating system 10, the hydrocooler 14 functions to pre-chill and clean the food 12 before the food 12 is crust frozen in the liquid nitrogen immersion freezer 16. After being crust frozen in liquid the nitrogen immersion freezer 16, freezing is completed, that is food 12 is frozen throughout, in the mechanical freezer 18.

In the food refrigerating system 10, the amount of heat required to be transferred from the food 12 in its crust freezing is distributed between the hydrocooler 14 and the liquid nitrogen immersion freezer 16. In other words, a portion of the heat is transferred to the cooling water 14 and a remaining portion of the heat is transferred to the liquid nitrogen 34 in the trough 32. As may be appreciated, the greater the amount of heat transferred between food 12 and cooling water 14, the less heat transfer will be required between the food 12 and the liquid nitrogen 34. The lower this latter heat transfer, the less is the quantity of liquid nitrogen 34 that will boil to evolve a vapour and hence the lower the rate that liquid nitrogen 34 will be required to be supplied to the liquid nitrogen immersion freezer 16.

In the prior art, the temperature of the cooling water 22, as supplied from a source ground water or from a source of municipal water is lower than that of the food 12 and hence, there is some degree of heat transfer between the food 12 and the cooling water 22. In accordance with the present invention, the cryogen, in this case liquid nitrogen, is further conserved by recovering the cooling potential of the nitrogen vapour in cooling water 22. The cooling potential of the nitrogen vapour is recovered by transferring further heat from cooling water 22 to the nitrogen vapour prior to the reception of cooling water 22 in the hydrocooler 14. As a result of such further heat transfer between the cooling water 22 and the nitrogen vapour, the temperature of cooling water 22 is lowered and thus, there exists a greater degree of heat transfer between the cooling water 22 and food 12 than in the prior art. Consequently, cryogen requirements are further reduced over hydrocooler and cryogenic freezer arrangements of the prior art.

A major problem in recovering the cooling potential of the nitrogen vapour, is that the nitrogen vapour venting from liquid the nitrogen immersion freezer 16, can have a temperature as low as 77K, low enough to freeze water. This problem is solved in the present invention by accomplishing the heat transfer between the cooling water 22 and the nitrogen vapour in an eductor 50. As will be discussed below, the eductor 50 is connected to a phase separation tank 52 in which cooling water 22 accumulates. Accumulated cooling water 22 is preferably gravity fed from an outlet 54 of a phase separation tank 52 to the hydrocooler 14 via a delivery line 24 connected to the outlet 54. After the heat transfer from the food 12 to the cooling water 22 in the hydrocooler 14, cooling water 22 passes out of the hydrocooler 14 through drain 26 and is recycled to the phase separation tank 52 via a recycle line 56 having an in-line recycle pump 58 and optionally an optional filter 60, used when cooling water 22 is also used in cleaning food 12.

Cooling water 22 is pumped through the eductor 50 by a pump 62, powered by an electric motor 64. The pump 62 has an inlet 66 and an outlet 68. A transfer pipe 69 affords communication between an inlet 66 of a pump 62 and the bottom of the phase separation tank 52. An outlet pipe 70 affords communication between the outlet 68 of the pump 62 and the eductor 50. Additionally, the eductor 50 is connected to vent 40 of liquid nitrogen immersion freezer 16 by a vent duct 72.

The pump 62 pumps cooling water 22 through the eductor 50, which in turn, draws boiled off nitrogen vapour into a mixture with cooling water 22. As a result of such mixing, heat is directly transferred from cooling water 22 to the nitrogen vapour.

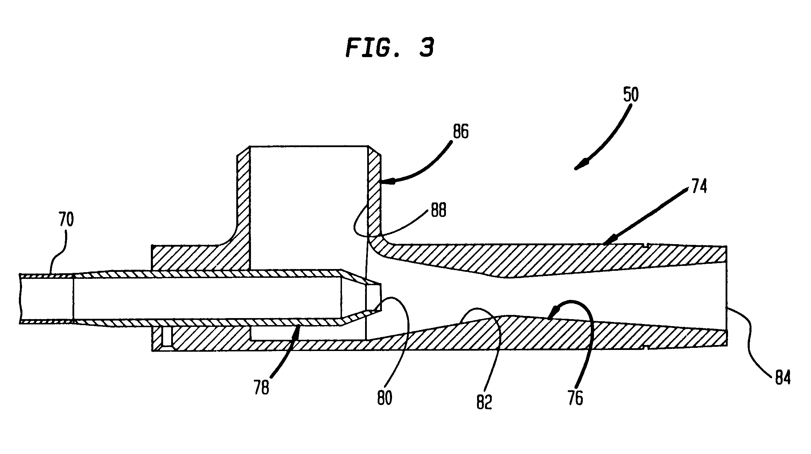

With reference to Fig. 3, a preferred embodiment of eductor 50 is illustrated. Eductor 50 includes a body portion 74 having a central passageway 76. In one end of central passageway 76, an internal nozzle 78 is connected to body portion 74. Internal nozzle 78 is in turn connected, at one end, to outlet pipe 70. The other end of internal nozzle 78 defines nozzle orifice 80 within central passageway 76. Beyond nozzle orifice 80, central passageway 76 gradually reduces in transverse cross-sectional area to a central region 82 and then gradually increases to form a discharge opening 84. Body portion 74 is also provided with a gas inlet section 86 connected to vent duct 72. Gas inlet opening section 86 is provided with an inlet passage 88 in communication with central passageway 76 near restriction orifice 80.

Although cooling water 22 may freeze to some degree at or near the centre of the central passageway 76, the constant flow of cooling water 22 prevents freezing from occurring throughout the entire cross-section of the central passageway 76. Any such frozen water would subsequently thaw in the phase separation tank 52.

As may be appreciated, cooling water 22 undergoes a drop in pressure when passing through restriction orifice 80. The drop in pressure in turn produces a low pressure region in central passageway 76 of eductor 50 which draws the nitrogen vapour through vent duct 72 and into a mixture with pumped cooling water 22. The mixing of the nitrogen vapour and cooling water 22 occurs within central passageway 76, beyond nozzle orifice 80. Maximum mixing occurs in central region 82. Thereafter, a mixture of cooling water 22 and nitrogen vapour is discharged from eductor 50 through its discharge orifice 84.

The discharge opening 84 of eductor 50 can be mounted on a suitable mounting (not illustrated) to deliver directly the cooling water from eductor 50 to hydrocooler 14. However, since the flow of discharge cooling water 22 is violently erratic, it is preferable first to separate or disengage the nitrogen vapour from the cooling water 22 before delivering the cooling water 22 to the hydrocooler 14. It is also preferable to separate or disengage the nitrogen vapour from the cooling water 22 to enable the nitrogen vapour to be conducted some distance from the work area surrounding the food refrigeration system 10 in order to safeguard the health of workers. In addition to the foregoing, it is important that no flow restriction be placed in the path of cooling water and nitrogen vapour discharge from eductor 34. Such a flow restriction could cause eductor 34 to overflow.

In the present invention, the nitrogen vapour is separated from cooling water 22 and the mixture of nitrogen vapour and cooling water 22 is discharged from eductor 50 without flow restriction by discharging cooling water 22 from eductor 50 into the phase separation tank 52. Although phase separation tank can be constructed so as to be open at the top thereof, preferably it is provided with a top wall 90 having two openings 92 and 94.

The eductor 50 is connected to the top wall 90 with its discharge opening 84 aligned with the opening 92. A vent 96 is also connected to the top wall 90 in alignment with the other opening 94. Cooling water 22 from eductor 50 is thus discharged into the phase separation tank 52. At the same time, nitrogen vapour separates from cooling water 22 and is vented through nitrogen conduit 96 at some distance from the work area surrounding food refrigeration system 10. As mentioned previously, cooling water 22 accumulated in phase separation tank 52, gradually feeds to hydrocooler 14 by provision of a delivery pipe 24 connected to the outlet 54. It is to be noted that although the cooling water 22 may be recycled through recycle pipe 56, this is entirely optional and instead, the cooling water may be drained simply into the municipal sewer system, with of course the greater concomitant expense of continually supplying cooling water.

A nitrogen exhaust outlet 98 having a butterfly damper 100 can be connected to vent 96. As may be appreciated by those skilled in the art, the degree to which nitrogen vapour is sucked by eductor 50 is dependent upon a difference in pressure of the cryogenic vapour as measured between the inlet passage 88 and the discharge opening 84. The greater this difference in pressure, the greater the rate at which nitrogen vapour is sucked by the eductor 50. The butterfly damper 100 is operable to change the area of the exhaust outlet 98 by rotating between positions in which the exhaust outlet 98 is open and closed. As the exhaust outlet 98 is closed by the damper 100, the back pressure within the eductor 50 increases, that is the pressure at discharge opening 84. This results in nitrogen vapour being sucked into the eductor 50 to a lesser extent and thus, the temperature of cooling water 22 is lowered to a lesser degree.

In the illustrated preferred embodiment of the apparatus according to the invention, the electric motor 64 is rated at about 15.0 horsepower. The eductor 50 is designed to draw in nitrogen vapour at a rate of about 2,000.0 Kg/hr. and at a temperature of about 200.0K. Cooling water 22 is pumped through the eductor 50 at about 227.0 litres/minute. The recycle pump 58 is identical to pump 62 and is powered by an electric motor also rated at about 15.0 horsepower so as to pump recycle cooling water 22 at about a rate of 113.0 litres/minute. The entry pressure of cooling water 22 in eductor 50 is about $4.05 \times 10^5$ Pascals and the mixture of cooling water and nitrogen vapour is discharged at about atmospheric pressure. Eductor 50 is designed with restriction orifice 80 having a diameter of about 1.50 cm.; gas inlet section 86 having an internal diameter of about 25.4 cm.; central region 82 having a diameter of about 10.16 cm.; and discharge opening 84 having a diameter of about 25.4 cm. Hydrocooler is designed to hold about 400.0 litres and phase separation tank 52 is designed to accumulate 340.0 litres of cooling water 22.

The food refrigeration system, described above, is designed to freeze clams at a rate of about 2200.0 Kg/hr. with liquid nitrogen being supplied at a rate of about 2,000.0 Kg/hr. In the prior art, the cooling water is supplied to the hydrocooler 14 at a temperature of 290K. In accordance with the present invention, the cooling water can be reduced in temperature to about 275.0K. The increased temperature spread between the clams and cooling water 22 results in savings of liquid nitrogen of as much as 20.0%. The percentage reduction in the nitrogen consumption will of course decrease with increasing system thermal inefficiencies. Conversely, it will increase with decreasing temperature of the nitrogen vapour vented from the immersion freezer.

Although the preferred embodiment has been illustrated with reference to a food refrigeration system 10 having three cooling stages, the present invention would have equal applicability to other food refrigeration systems having two or greater number of cooling stages. For instance, if it were desired for a food article simply to be frozen without first being crust frozen, the food refrigeration system might comprise a hydrocooler and a liquid nitrogen immersion freezer. The conveyor belt associated with such liquid nitrogen immersion freezers would be set to run at a rate such that the residence time of articles of food in the immersion freezer was sufficient completely to freeze food articles. In a like embodiment, it would also be possible to replace the immersion freezer with a carbon dioxide spiral belt freezer. In such an embodiment, carbon dioxide vapour venting from such a freezer would be drawn into an eductor for mixture with the cooling water flowing to the hydrocooler. In addition to the foregoing, the present invention could be adapted for use in a food processing system in which a liquid nitrogen immersion freezer was used as a chiller. In such a system, a hydrocooler and eductor arrangement would have to be added.

As may be appreciated, such invention has broader applications that lie beyond food refrigeration system 10. For instance, a motive fluid, such as water, could be pumped through an eductor connected to any source of cryogenic vapour and the discharge of water could be directed against an article to be cooled with an enhanced heat transfer rate.

Although preferred embodiments have been shown and described in detail, it would be readily understood and appreciated by those skilled in the art, that numerous omissions, changes, and additions may be made without departing from the spirit and scope of the invention.

## Claims

1. A refrigeration apparatus for refrigerating food comprising:

a supply of a liquid cryogen;

a source of cooling water having a temperature lower than that of the food; and

at least two sequential cooling stages for transferring an amount of heat from the food sufficient to refrigerate the food;

a first of the at least two sequential cooling stages having means for transferring a portion of the amount of heat from the food to the cooling water in proportion to the temperature difference between the food and the cooling water; and

a second of the at least two sequential cooling stages having means for transferring a remaining portion of the amount of heat from the food to the cryogen so that the food is refrigerated and a quantity of the cryogen boils to evolve a cryogenic vapour and is thereby expended;

characterised in that the apparatus additionally includes:

heat transfer means connected to the second of the at least two sequential cooling stages and the source of cooling water for transferring further heat from the cooling water to the cryogenic vapour and thereby increasing the temperature difference between the food and the cooling water; and

delivery means for delivering the cooling water from the said heat transfer means to the first of the at least two sequential cooling stages, whereby the portion of the amount of heat transferred from the food to the cooling water is increased in proportion to the increased temperature difference between the food and the cooling water and the remaining portion of the amount of heat transferred from the food to the cryogen is thereby reduced along with the quantity of the cryogen expended.

2. Apparatus according to claim 1, wherein:
the heat transfer means comprises:
a pump having an inlet connected to the source of cooling water and an outlet; and
eductor means connected to the outlet of the pump and the second of the at least two sequential cooling stages for drawing the cryogenic vapour into a mixture with the cooling water and thereby effecting the heat transfer between the cooling water and the cryogenic vapour; and
the delivery means is adapted to deliver the cooling water from the eductor means to the first of the at least two sequential cooling stages.

3. Apparatus according to Claim 2, wherein the delivery means includes phase separation means for separating the cryogenic vapour from the cooling water.

**4.** Apparatus according to claim 3, wherein:
the eductor means has a discharge opening through which the mixture of cooling water and cryogenic vapour is discharged; and
the phase separation tank comprises:
a phase separation tank positioned beneath the discharge opening of the eductor means to separate the cryogen vapour from the cooling water, to accumulate the cooling water, and to vent the cryogenic vapour from the top of the phase separation tank; and
a delivery line connecting the phase separation tank to the first of the at least two sequential cooling stages.

**5.** Apparatus according to claim 4, wherein:
the first of the at least two sequential cooling stages has a drain for draining the cooling water after having had the portion of the amount of heat transferred thereto;
the heat transfer means further include a first recycle line having an in-line pump, the first recycle line affording communication between the drain of the first of the at least two sequential cooling stages and the phase separation tank for recycling the cooling water back to the phase separation tank, and a second recycle line communicating between the bottom of the phase separation tank and the inlet of the pump; and
the source of cooling water is formed by cooling water accumulated in the phase separation tank.

**6.** Apparatus according to claim 4 or 5, wherein:
the phase separation tank has a top wall having two openings, a duct connected to the top wall in alignment with one of the two openings for venting the cryogenic vapour; and
the eductor means is connected to the top wall with its discharge opening aligned with the other of the two openings.

**7.** Apparatus according to claim 6, wherein:
the duct of the phase separation tank has a damper to open and close the duct and thereby decrease and increase the pressure difference within the eductor means and thus the rate at which cryogenic vapour is drawn thereby.

**8.** A method of refrigerating food comprising:
supplying a liquid cryogen;
supplying cooling water at a temperature lower than that of the food to define a temperature difference between the food and the cooling water; and
transferring an amount of heat from the food, sufficient to refrigerate the food, in at least two sequential cooling stages by,
transferring a portion of the amount of heat from the food to the cooling water in the first of the at least two cooling stages at a rate proportional to the temperature difference between the food and the cooling water, and
transferring a remaining portion of the amount of heat from the articles to the cryogen so that a quantity of the cryogen boils off into a cryogenic vapour and is thereby expended in the second of the at least two sequential cooling stages; the improvement comprising:
transferring further heat from the cooling water to the cryogenic vapour and thereby increasing the temperature difference between the food and the cooling water; and
after the further heat transfer between the cooling water and the cryogenic vapour delivering the cooling water to the first of the at least two sequential cooling stages, whereby the portion of the amount of heat transferred from the food to the cooling water is increased and the remaining portion of heat transferred from the food to the cryogen is thereby reduced along with the quantity of the cryogen expended.

**9.** A method according to claim 8, wherein:
heat is transferred from the cooling water by pumping the cooling water through eductor means connected to the second of the at least two sequential cooling stages for drawing the cryogenic vapour into a mixture with the cooling water; and
the cooling water is delivered from the eductor means to the first of the at least two cooling stages.

**10.** A method according to claim 9, wherein during the delivery of the cooling water to the first of the at least two cooling stages the cryogenic vapour is separated from the cooling water.

**11.** An apparatus for cooling an article with a motive fluid having a lower temperature than that of the article, said apparatus comprising:
a source of the motive fluid;
a source of cryogenic vapour;
heat transfer means for transferring heat from the article to the motive fluid, thereby to cool the article;
a pump having an inlet connected to the source of motive fluid and an outlet;
eductor means connected to the outlet of the pump and the source of cryogenic vapour for drawing the cryogenic vapour into a mixture with the motive fluid and thereby effecting further heat transfer from the motive fluid to the cryogenic vapour and lowering the temperature of the motive fluid; and
delivery means for delivering the motive fluid from the eductor means to the heat transfer means, whereby the heat transfer from the article to the motive fluid and the cooling of the article are enhanced by the lower temperature of the motive fluid.

12. A method of cooling an article with a motive fluid having a lower temperature than that of the article, said method comprising:
supplying the motive fluid;
supplying cryogenic vapour;
transferring heat from the article to the motive fluid, thereby to cool the article; and
prior to the heat transfer from the article to the motive fluid, pumping the motive fluid through eductor means for drawing the cryogenic vapour into a mixture with the motive fluid and thereby effecting further heat transfer from the motive fluid to the cryogenic vapour and lowering the temperature of the motive fluid, whereby the heat transfer from the article to the motive fluid and the cooling of the article are enhanced by the lower temperature of the motive fluid.

13. A refrigeration apparatus comprising first and second sequential cooling stages, the first stage having means for contacting with water items to be refrigerated and the second stage means for contacting with liquid cryogen items cooled in the first stage, characterised in that the apparatus additionally includes a water cooler for contacting cryogenic vapour evolved in the second stage with water to be used in the first stage, said water cooler including an eductor for drawing said cryogenic vapour into a stream of the water.

14. Apparatus according to claim 13, additionally including a phase separator for disengaging cryogenic vapour from the water.

15. A refrigeration method comprising cooling items to be refrigerated first by contact with water and then by contact with a cryogenic liquid, characterised in that vapour evolved from the cryogenic liquid is drawn into a stream of the water upstream of contact between the water and the items and thereby pre-cools the water.

FIG. 1

FIG. 2

EP 0 492 983 A2

# FIG. 3

50

86

88

70

74

78

80

82

76

84